Europäisches Patentamt

European Patent Office

Office européen des brevets

(11) Numéro de publication: **0 390 639**
**A1**

# (12) DEMANDE DE BREVET EUROPEEN

(21) Numéro de dépôt: 90400750.7

(22) Date de dépôt: 20.03.90

(51) Int. Cl.5: **G06F 11/00**

(30) Priorité: 29.03.89 FR 8904092

(43) Date de publication de la demande:
03.10.90 Bulletin 90/40

(84) Etats contractants désignés:
DE ES GB IT

(71) Demandeur: REGIE NATIONALE DES USINES RENAULT
Boîte postale 103 8-10 avenue Emile Zola
F-92109 Boulogne-Billancourt(FR)

(72) Inventeur: Jousselin, Jean-Marc
135, rue Danton
F-92500 Rueil(FR)
Inventeur: Masurier, Gérard
28 Bis, rue de l'Oise
F-95540 Mery Sur Oise(FR)

(74) Mandataire: Chassagnon, Jean Alain et al
8/10, avenue Emile Zola
F-92109 Boulogne-Billancourt(FR)

(54) **Dispositif de surveillance du fonctionnement d'un microprocesseur.**

(57) Dispositif de surveillance du fonctionnement d'un microprocesseur, comportant un montage en cascade de deux bascules (1,2) monostables, redéclenchables, dont les temps d'impulsions (t1, t2) définissent une fenêtre temporelle à l'intérieur de laquelle doit se situer la période des impulsions provenant du microprocesseur (3) à surveiller et fournissant en sortie (18) une impulsion de réinitialisation pour le microprocesseur si ce n'est pas le cas, caractérisé par le fait que ledit dispositif comporte en outre un circuit d'initialisation (6) agencé pour fournir une impulsion aux entrées d'initialisation (8,9) des bascules (1,2) lors de la mise sous tension du dispositif.

FIG.2

EP 0 390 639 A1

L'invention concerne les dispositifs de surveillance du fonctionnement d'un microprocesseur, dispositifs habituellement appelés "chiens de garde".

Un tel dispositif, qui est un circuit extérieur au microprocesseur, a pour fonction de surveiller le bon déroulement du programme dans le microprocesseur en y détectant les éventuelles anomalies de fonctionnement et en réinitialisant le programme après de telles détections. Ceci est particulièrement utile, par exemple dans le cas où un circuit électronique comportant un microprocesseur est placé dans un véhicule automobile et peut être perturbé par des parasites pouvant altérer le bon déroulement du programme.

Initialement, un tel dispositif était constitué par un compteur associé à un oscillateur lui envoyant des impulsions, l'entrée de remise à zéro du compteur étant reliée à la sortie du microprocesseur, qui est programmé pour envoyer périodiquement une impulsion sur cette sortie, tandis que la sortie de retenue ou de débordement du compteur est reliée à l'entrée de réinitialisation ou "RESET" du microprocesseur. A chaque impulsion reçue du microprocesseur, le dispositif repart alors à zéro, tandis que dans le cas où la fréquence des impulsions reçues devient anormalement basse, le compteur déborde et réinitialise le microprocesseur.

Un tel dispositif avait cependant pour inconvénient de ne pas détecter les anomalies si le microprocesseur émettait des impulsions à une fréquence trop élevée, ou au contraire restait bloqué à un niveau provoquant la remise à zéro permanente du compteur.

Pour remédier à un tel état de fait, on connaît des chiens de garde plus perfectionnés, comportant une fenêtre temporelle et agencés pour produire une impulsion de réinitialisation chaque fois que la période des impulsions venues du microprocesseur sort de la fenêtre temporelle, définissant avec une certaine tolérance le temps normal d'exécution du programme entre deux impulsions.

En particulier, on sait qu'un tel chien de garde à fenêtre temporelle peut être constitué par deux bascules monostables redéclenchables montées en cascade et dont les durées d'impulsions respectives correspondent sensiblement aux valeurs minimales et maximales de la période.

De la sorte, une période trop faible des impulsions à l'entrée du chien de garde, c'est-à-dire une fréquence trop élevée, a pour effet de redéclencher en permanence la première bascule, laquelle par suite n'envoie pas d'impulsions à la seconde, cette dernière restant par conséquent à l'état bas ou retournant à cet état après sa constante de temps, lorsque cela se produit.

Une période correcte, c'est-à-dire comprise entre les deux constantes de temps des deux bascules, permet au contraire à la première bascule d'envoyer des impulsions distinctes à la seconde qui, de ce fait, redéclenche en permanence et reste à l'état haut.

Enfin, une période trop grande, c'est-à-dire au-delà de la constante de temps de la deuxième bascule, permet au contraire à celle-ci de ne pas redéclencher en continu et par conséquent d'envoyer au moins une impulsion distincte en sortie, puis de rester à l'état bas, au moins pendant un certain temps.

La détection d'une anomalie, c'est-à-dire la présence d'une période en-dehors de la fenêtre temporelle, revient donc à détecter le passage de la deuxième bascule de l'état haut à l'état bas, ce qui peut être détecté par un dispositif logique approprié.

Un tel dispositif de chien de garde, par exemple celui décrit dans le document DE-A-3 240 704, conserve cependant encore trois graves défauts de fonctionnement :

1°/ à la mise sous tension, l'initialisation du chien de garde n'a lieu qu'après la réception de la première impulsion provenant du microprocesseur, de sorte que si le microprocesseur se trouve perturbé dès le départ et n'envoie pas de première impulsion au chien de garde, celui-ci demeure inopérant;

2°/ pour la même raison, si le microprocesseur se trouve perturbé dès le départ et donne des impulsions à un rythme trop rapide, aucune impulsion de réinitialisation n'est envoyée par le chien de garde;

3°/ si le microprocesseur, après avoir fonctionné normalement, se trouve perturbé de manière que la période des impulsions qu'il envoie sorte de la fenêtre temporelle, le chien de garde envoie une seule impulsion de réinitialisation qui est sensée réinitialiser le microprocesseur et remettre tout en ordre. Si cette impulsion unique ne suffit pas, c'est-à-dire si le microprocesseur demeure perturbé, le chien de garde n'a plus aucun effet.

Le but de l'invention est de réaliser un chien de garde du type précité, mais qui élimine les derniers inconvénients signalés.

L'invention utilise, par conséquent, le montage connu de deux bascules monostables, redéclenchables, montées en cascade, avec des temps d'impulsions correspondant respectivement à la période minimale pour la première bascule et à la période maximale des impulsions du microprocesseur pour la seconde bascule, ce montage incluant éventuellement une logique de détection du changement d'état de la deuxième bascule, afin d'engendrer une impulsion en sortie du montage.

Conformément à l'invention, ce premier montage est complété par un circuit d'initialisation qui a pour fonction, dès la mise sous tension de l'ensemble du dispositif, d'envoyer une impulsion aux entrées d'initialisation des deux bascules, afin de fixer l'état initial de celles-ci même si aucune impulsion ne parvient du microprocesseur.

En outre, le dispositif se complète avantageusement par, un circuit d'armement commandé à partir du circuit d'initialisation et qui a pour fonction de fournir une première impulsion à l'entrée de la première bascule, même si aucune impulsion ne parvient du microprocesseur. Ce dispositif d'armement comporte un retard permettant à l'armement de n'avoir lieu qu'après l'initialisation.

De préférence, la sortie du montage des deux bascules et la sortie du circuit d'initialisation sont couplées logiquement vers une sortie de réinitialisation, tandis que l'entrée du circuit d'armement est couplée logiquement à cette sortie d'initialisation, de telle manière que l'armement ou le réarmement ait lieu à chaque envoi d'une impulsion de réinitialisation au microprocesseur.

Enfin, le dispositif comporte de préférence un couplage logique en retour de la sortie d'initialisation précédente et de la sortie du circuit d'initialisation vers les entrées d'initialisation des bascules, de manière que chaque impulsion de réinitialisation envoyée au microprocesseur produise en même temps la réinitialisation des deux bascules avant leur réarmement.

D'autres particularités de l'invention apparaîtront dans la description qui va suivre d'un mode de réalisation pris comme exemple et représenté sur le dessin annexé, sur lequel :

la figure 1 est un schéma logique d'ensemble;

la figure 2 le schéma électronique d'un mode de réalisation particulier; et

la figure 3 les chronogrammes de niveau de divers noeuds du système.

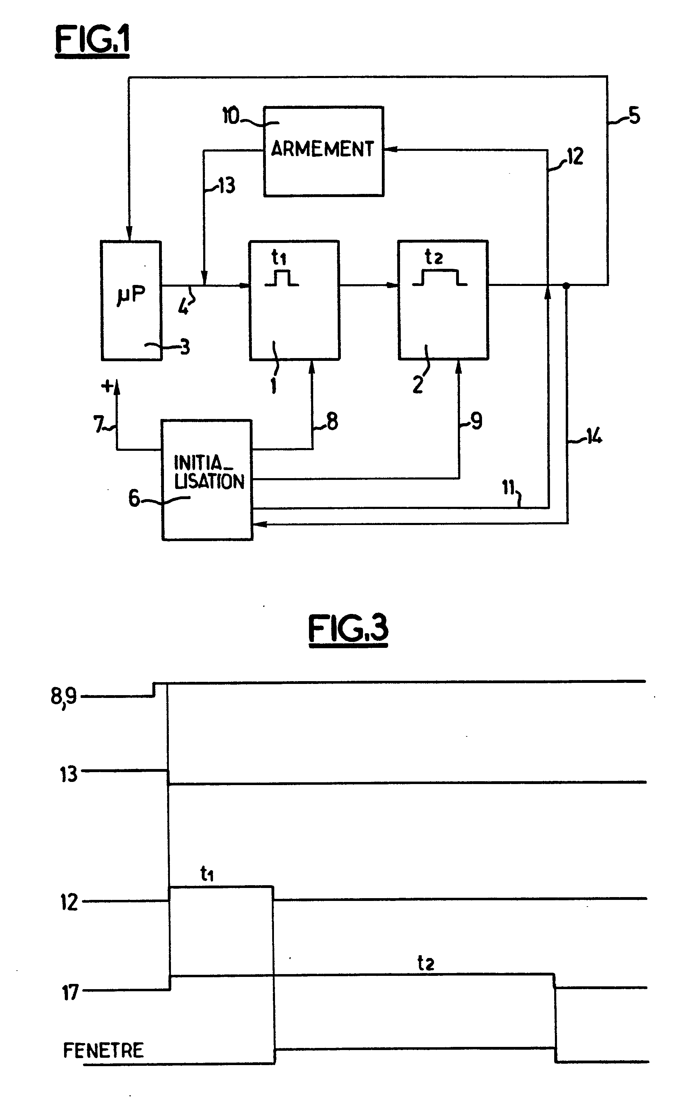

On voit sur la figure 1 les deux bascules monostables redéclenchables 1 et 2, montées en cascade, la première recevant des impulsions d'un microprocesseur 3 par la connexion 4, et la dernière envoyant au microprocesseur 3 des impulsions de réinitialisation par la liaison 5, éventuellement par l'intermédiaire d'une logique de détection et/ou d'inversion non représentée.

Conformément à l'invention, le circuit se complète par un dispositif d'initialisation 6 avec son alimentation 7, envoyant par les connexions 8 et 9 et lors de chaque mise sous tension de 7, une impulsion d'initialisation aux deux bascules 1 et 2, plaçant chacune dans l'état initial voulu.

Le dispositif comporte de plus un circuit d'armement 10 dont l'entrée est commandée par les liaisons 11 et 12 depuis le circuit d'initialisation 6 et qui envoie chaque fois qu'il est commandé, une impulsion à sa sortie 13 qui est couplée avec la liaison 4 à l'entrée de la première bascule.

De la sorte, à chaque mise sous tension de l'ensemble du dispositif, on est sûr que les bascules seront initialisées et qu'au moins une impulsion d'armement sera envoyée à la première bascule, même si aucune impulsion ne parvient du microprocesseur.

Le circuit d'armement 10 comporte une temporisation pour que son impulsion d'armement ne parvienne qu'avec un léger retard après que l'initialistion des bascules ait eu lieu.

Les connexions 11 et 12 indiquées précédemment sont de préférence connectées à la sortie 5 de la seconde bascule 2 pour que l'armement ou le réarmement des bascules ait lieu après chaque envoi d'une impulsion de réinitialisation au microprocesseur. En outre, une autre liaison logique 14 assure en retour l'envoi des impulsions de réinitialisation de la sortie 5 vers le circuit d'initialisation 6, afin d'assurer également l'initialisation et la réinitialisation des bascules à chaque envoi d'une impulsion de réinitialisation au microprocesseur lors du fonctionnement normal du chien de garde.

Il est important de remarquer que, grâce à cet agencement, même si rien ne parvient du microprocesseur, à la mise sous tension comme lors du fonctionnement, chaque impulsion passant par 5 produit en même temps et indépendamment du microprocesseur la réinitialisation par 14, 6, 8 et 9, puis le réarmement par 11, 12, 10 et 13, et par conséquent, après l'écoulement du temps réglé pour la deuxième bascule, l'envoi à nouveau d'une impulsion d'initialisation à la sortie 5, et ainsi de suite, jusqu'à ce qu'il se passe quelque chose dans le microprocesseur qui conduise au fonctionnement normal.

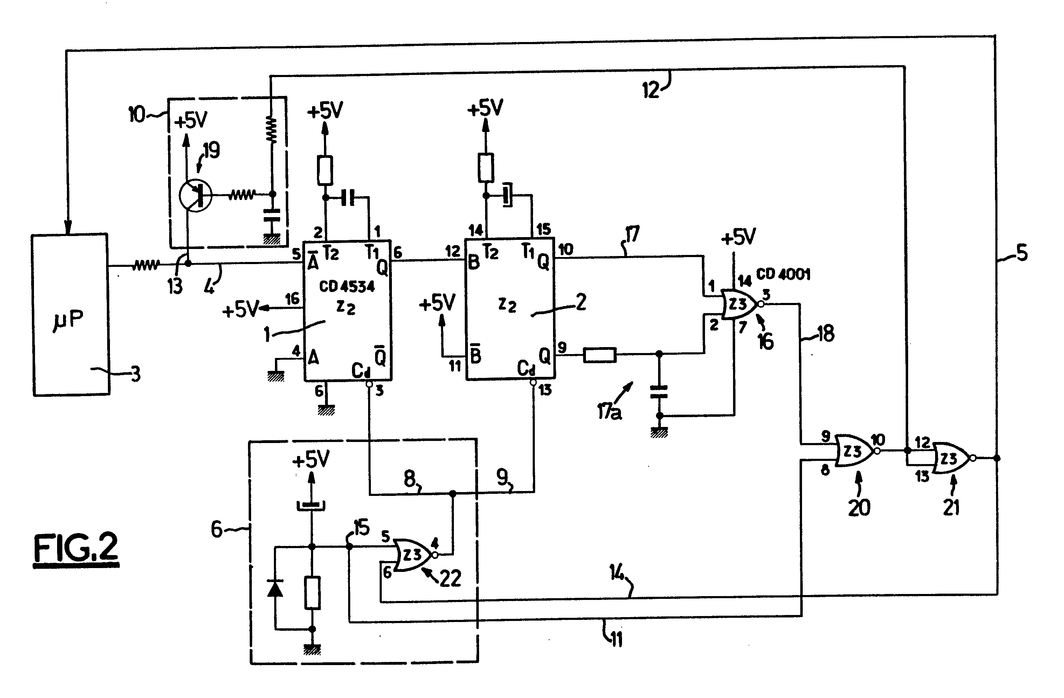

Pour la réalisation pratique, on voit sur la figure 2, que le circuit d'initialisation 6 peut avantageusement être constitué par un simple circuit RC qui, lors de la mise sous tension de l'ensemble, produit au point 15 une impulsion au niveau haut, le temps de charge du condensateur, puis repasse au niveau bas.

L'ensemble des deux bascules 1 et 2 en cascade comporte à sa sortie une logique 16 de détection du changement d'état de la bascule 2, constituée ici par une simple porte NOR, dont les deux entrées sont couplées, l'une directement par 17 à la sortie directe Q de la bascule 2 et l'autre à la sortie inverseuse $\overline{Q}$ de cette bascule par l'intermédiaire d'un circuit différentiateur 17a introduisant un retard dans le changement d'état. Cette logique produit donc une impulsion de durée limitée dans sa sortie 18 chaque fois que la période des impulsions arrivant en 4 se trouve à l'extérieur de la fenêtre temporelle définie par les deux durées d'impulsions t1 et t2 des deux bascules 1 et 2.

Le circuit d'armement 10 peut avantageusement être constitué par un simple transistor 19, commandé à partir d'un circuit RC assurant le retard voulu entre l'impulsion d'entrée 12 et l'impulsion de sortie 13 transitant par 4.

Conformément à l'invention, la commande 12/11 a lieu par l'intermédiaire d'une liaison logique 20 constituée par une simple porte NOR dont les entrées sont respectivement les sorties 18 et 11 et dont la sortie commande la liaison 12, elle-même en liaison logique, éventuellement par l'intermédiaire d'une porte inverseuse 21 avec la sortie de réinitialisation 5 du chien de garde.

Enfin, cette dernière est elle-même de préférence couplée en retour au circuit d'initialisation 6 par la liaison 14 et par une autre porte logique 22 dont les entrées sont reliées à 14 et à 15, et dont la sortie commande les entrées 8 et 9 d'initialisation des bascules.

De la sorte, lors de la première mise sous tension, le circuit d'initialisation 6 produit par 22, 8 et 9, l'initialisation des bascules 1 et 2 comme représenté sur le premier chronogramme de la figure 3. En même temps, il envoie par 11 et 20, une impulsion en 12 à l'entrée du circuit d'armement 10, lequel envoie en 13 une impulsion avec un léger retard, comme représenté sur le deuxième chronogramme de la figure 3. Cette impulsion constitue le point de départ des deux temps t1 et t2 des bascules 1 et 2 comme représenté sur les troisième et quatrième chronogrammes de la figure 3. Le dernier chronogramme de la figure 3 représente la "fenêtre" dans laquelle doit arriver la première impulsion du microprocesseur en cas de fonctionnement normal.

Si, par suite d'une anomalie de fonctionnement, cette première impulsion ne parvient pas, il est clair, que les deux bascules 1 et 2, préalablement initialisées et armées, comme on vient de le voir, produiront par 18 et 20 une impulsion de réinitialisation, non seulement vers le microprocesseur par 21 et 5, mais également vers le dispositif d'initialisation 6 par le couplage en retour 14 et vers le dispositif d'armement 10 par 12 avec le retard indiqué. Le processus recommence par conséquent et envoie une série d'impulsions de réinitialisation au microprocesseur chaque fois que s'est écoulé le temps t2 majoré dudit retard.

On voit ainsi que, grâce à l'invention, quel que soit l'état de non fonctionnement normal dès le départ ou de cessation de fonctionnement du microprocesseur 3 après un fonctionnement correct, le dispositif enverra non pas une impulsion, mais une série d'impulsions de réinitialisation au microprocesseur 3 jusqu'à l'obtention d'un fonctionnement correct pour lequel la bascule 1 oscille et la bascule 2 reste à l'état haut.

## Revendications

1. Dispositif de surveillance du fonctionnement d'un microprocesseur, comportant un montage en cascade de deux bascules (1,2) monostables, redéclenchables, dont les temps d'impulsions (t1, t2) définissent une fenêtre temporelle à l'intérieur de laquelle doit se situer la période des impulsions provenant du microprocesseur (3) à surveiller et fournissant en sortie (18) une impulsion de réinitialisation pour le microprocesseur si ce n'est pas le cas,
caractérisé par le fait que ledit dispositif comporte en outre un circuit d'initialisation (6) agencé pour fournir une impulsion aux entrées d'initialisation (8,9) des bascules (1,2) lors de la mise sous tension du dispositif.

2. Dispositif de surveillance selon la revendication 1, caractérisé par le fait qu'il comporte en outre un circuit d'armement (10) commandé à partir du circuit d'initialisation (6) et comportant un retard de fonctionnement pour n'envoyer d'impulsion sur l'entrée (4) de la première bascule qu'après l'initialisation de ces bascules.

3. Dispositif de surveillance selon la revendication 2, caractérisé par le fait qu'une sortie (11) du circuit d'initialisation (6) est couplée logiquement (20) à la sortie (18) du montage des deux bascules vers une sortie (12) de commande d'entrée du dispositif d'armement (10), en liaison logique (21) avec la commande (5) de réinitialistion du microprocesseur, afin que chacune de ces réinitialisations du microprocesseur produise le réarmement des deux bascules.

4. Dispositif de surveillance selon la revendication 3, caractérisé par le fait qu'il comporte un couplage logique en retour (14,22) de la sortie (5) de réinitialisation du microprocesseur vers la réinitialisation (8,9) des bascules, afin que celles-ci soient réinitialisées à chaque réinitialisation du microprocesseur et avant leur réarmement par le circuit d'armement (10).

## FIG.1

## FIG.3

**FIG.2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | DE-A-3 240 704  (BOSCH) <br> * Revendication 1; page 5, lignes 14-31 * <br><br> --- | 1 | G 06 F  11/00 |
| Y | US-A-4 586 179  (SIRAZI et al.) <br> * Colonne 4, lignes 21-45; figure 1 * <br> --- | 1 | |
| Y | ELECTRONICS, vol. 49, no. 6, 18 mars 1976, pages 106-107; J.R. BAINTER: "Dual-555-timer circuit restarts microprocessor" <br> * Page 106, colonne 2, ligne 23 - page 107, colonne 1, ligne 4 * <br> ----- | 4 | |

**DOMAINES TECHNIQUES RECHERCHES (Int. Cl.5)**

G 06 F  11/00

Le présent rapport a été établi pour toutes les revendications

| Lieu de la recherche | Date d'achèvement de la recherche | Examinateur |
|---|---|---|
| LA HAYE | 18-05-1990 | SARASUA GARCIA L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P0402)